# EUROPÄISCHE PATENTANMELDUNG

(11) **EP 0 710 535 A1**
(43) Veröffentlichungstag der Anmeldung: **08.05.1996**
(21) Anmeldenummer: 95890174.6
(22) Anmeldetag: 03.10.1995
(51) Int. Cl.: B29C 45/27

(54) **Spritzgussform**

(30) Priorität: 07.11.1994 AT 19940002060
(71) Anmelder: RICO Elastomere Projecting GmbH, A-4600 Wels (AT)
(72) Erfinder: Kornfelder, Gerhard, A-4722 Peuerbach (AT)
(74) Vertreter: Haffner, Thomas M., Dr.

(57) **Zusammenfassung**

Die Spritzgußform für warmverfestigende oder vulkanisierende elastomere Materialien weist ein Formnest (10) und eine gekühlte Einspritzdüse (5) auf. Die Mündung der Einspritzdüse (5) liegt in Vorkammern (11), welche mit dem Formnest (10) in offener Verbindung steht, wobei die Mündung der Einspritzdüse (5) in Abstand von dem Formnest (10) mündet.

## Beschreibung

Die Erfindung bezieht sich auf eine Spritzgußform für warmverfestigende oder vulkanisierende elastomere Materialien mit einem Formnest und einer gekühlten Einspritzdüse, deren Mündung mit dem Formnest in Verbindung steht.

Warmverfestigende oder vulkanisierende Materialien, wie beispielsweise Flüssigsilikone oder Kautschuk, werden in bekannter Weise von einer Spritzgußmaschine oder Mischeinrichtung einem Formnest über einen Zufuhrkanal zugeführt. Zufuhrkanäle von mehreren Formnestern werden zu einer Verteilerspinne zusammengefaßt. Sowohl die Zufuhrkanäle als auch die Verteilerspinnen haben bei diesen bekannten Einrichtungen die Formtemperatur, wobei die Spritzgußteile nach dem Guß von den Enden der Angußstangen bzw. Verteilerspinnen abgetrennt werden müssen, was zu Oberflächenbeschädigungen bzw. zur Gratbildung am Ansatzbereich führen kann.

Insgesamt ergeben sich bei den bekannten Einrichtungen große Mengen an nicht wiederverwendbarem Material, wobei dies insbesondere für die Verarbeitung von ausvulkanisierten oder verfestigenden 2-Komponenten-Materialien Gültigkeit hat.

Während für die Herstellung von Spritzgußteilen aus bei der Abkühlung verfestigenden Materialien, wie z.B. Thermoplasten üblicherweise relativ dickwandige Einspritzdüsen Verwendung finden können und dadurch ein hohes Maß an Stabilität und Betriebssicherheit gewährleistet werden kann, wurde für die Verarbeitung von warmverfestigenden oder vulkanisierenden elastomeren Materialien bisher vorgeschlagen, mit überaus dünnwandigen und damit relativ filigranen Düsenkonstruktionen bis unmittelbar an das Formnest bündig abschließend Material zuzuführen. Die dünnwandige und damit relativ filigrane Ausbildung der Einspritzdüsen bzw. einer an eine Einspritzdüse angesetzten Kanüle soll dabei bewirken, daß der Wärmefluß zwischen der Temperatur der Form und der Einspritzdüse minimiert wird, um auf diese Weise eine saubere Trennung in noch flüssige bzw. bereits wärmeerhärtete Phasen zu gewährleisten, wodurch saubere Oberflächen bei gleichzeitiger Verringerung der Menge an nicht wiederverwertbarem ausgehärtetem bzw. vulkanisiertem Material erzielt werden sollen. Eine Einrichtung dieser Art ist beispielsweise der EPO 162 037 B1 zu entnehmen, bei welcher an die Einspritzdüse eine dünnwandige Kanüle angesetzt bzw. angeformt war. Diese über einen Einspritzdüsenkörper vorragende dünnwandige Einspritzdüsenspitze sollte ein geringes Wärmeleitvermögen aufweisen und relativ geringe lichte Querschnitte aufweisen. Aufgrund des geringen Wärmeleitvermögens einer derartigen Düsenspitze in Längsrichtung wurde davon ausgegangen, daß nur der formseitige Endbereich der Düsenspitze auf die Formtemperatur erwärmt wird, sodaß die Ausbildung eines größeren Pfropfens aus verfestigtem bzw. erstarrtem Spritzgußmaterial vermieden werden konnte.

Die Erfindung zielt nun darauf ab, eine Spritzgußform der eingangs genannten Art zu schaffen, bei welcher auf empfindliche und überaus dünnwandige Kanülen verzichtet werden kann, so daß mit wesentlich einfacherer und robuster Ausbildung von Düsenkörpern bzw. Einpritzdüsen gearbeitet werden kann. Zur Lösung dieser Aufgabe besteht die Erfindung ausgehend von einer Spritzgußform der eingangs genannten Art im wesentlichen darin, daß die Einspritzdüse in einer mit dem Formnest in offener Verbindung stehenden Vorkammer in Abstand von dem Formnest mündet. Abweichend von dem bisher vorgeschlagenen Verfahren, das warmverfestigende bzw. vulkanisierbare elastomere Material über einen Teilbereich mit verringertem Wärmeleitvermögen, insbesondere dünnwandige Kanülen, unmittelbar an den Rand des Formnestes zu bringen, wird erfindungsgemäß vorgeschlagen, mit einer konventionellen Einspritzdüse, welche durchaus wesentlich dickwandiger ausgebildet werden kann, in Abstand vom Formnest in einer Vorkammer zu münden, wobei die Vorkammer die Funktion der Wärmeisolation bzw der Reduktion der Wärmeübertragung von der Temperatur des Formnestes auf das in der Einspritzdüse enthaltene Material übernimmt. Es wird somit die Isolationseigenschaft von warmverfestigenden bzw. vulkanisierenden elastomeren Materialien unmittelbar dafür ausgenützt, daß eine Wärmeübertragung vom Formnest auf die Einspritzdüse bzw. die weiteren Zuführungskanäle verhindert wird, und es kann unmittelbar mit wesentlich stabileren und herstellungstechnisch einfacher herzustellenden Düsenkörpern gearbeitet werden. Insbesondere erlaubt die Verwendung derartiger stabilerer Einspritzdüsen auch größere Freiheiten in bezug auf den gewählten Einspritzdruck. Über das erfindungsgemäß vorgeschlagene Kaltkanalsystem lassen sich Latex, Flüssigsilikion, sowie Feststoffsilikon und Gummi od.dgl., erfolgreich einspritzen. Da dünnwandige Kanülen mit Wandstärken von unter 0,5 mm entfallen, ist die Herstellung des Einspritzdüsenkörpers bzw. der Einspritzdüse wesentlich einfacher, und stabile Einspritzdüsen mit Wandstärken von größer als 1 mm, etwa 2 mm lassen sich im Rahmen der erfindungsgemäßen Spritzgußform ohne weiteres einsetzen.

Mit Vorteil ist die erfindungsgemäße Ausbildung so getroffen, daß in eine Formplatte der Spritzgußform eine Verschleißhülse eingesetzt ist und daß die Einspritzdüse in die Verschleißhülse mündet. Eine derartige Ausbildung ist aber nicht Voraussetzung. Bei Verwendung einer Verschleißhülse lassen sich bei unveränderter Spritzgußform unterschiedliche Materialien verarbeiten, und es können die für die gewünschte Isolierung geforderten Materialstärken in der Vorkammer in entsprechender Weise durch Austausch von Verschleißhülson eingestellt werden, da auf diese Weise die verbleibenden lichten Querschnitte variiert werden können.

Mit Vorteil ist die Ausbildung so getroffen, daß die Vorkammer in der Formplatte konzentrisch zur Düsenmündung angeordnet ist, wodurch sichergestellt wird, daß die gewünschte Isolationswirkung gleichmäßig rund um den freibleibenden Zuführungskanal der Spritzdüsen ausgebildet wird. Die Einspritzdüse kann in konventioneller Weise durch an ihrem Außenumfang befindliche schrauben-, insbesondere doppelschraubenlinienförmige Kühlkanäle gekühlt werden, um ein Kaltkanalsystem zu gewährleisten. Um die gewünschte Isolation zu erzielen kann mit Vorteil die Ausbildung so getroffen werden, daß die Begrenzungswände der Vorkammer im wesentlichen parallel zur Mantelfläche der Einspritzdüse im Bereich der Mündung ausgebildet sind, wobei vorzugsweise der lichte Querschnitt der zur Einspritzdüse konzentrischen, ringförmigen Vorkammer in Richtung zur Düsenmündung kleiner wird. Insbesondere eine derartige Variation des lichten Querschnittes führt zu der in Abhängigkeit von dem jeweils gewählten Spritzmaterial gewünschten Isolierung und damit zur Ausbildung eines hinreichend großen freien Durchtrittskanals für das Einbringen von warmverfestigenden oder vulkanisierenden elastomeren Materialien in das Formnest.

Die indirekte Einspritzung über eine Vorkammer erlaubt weitestgehende Freiheit bei der Dimensionierung und Gestaltung der Düsenkörper bzw. der Einspritzdüsen, und es wird insbesondere die Möglichkeit geschaffen, wesentlich effizientere Kühleinrichtungen, wie beispielsweise gewendelte zweigängige Kühlkanäle, am Umfang des Düsenkörpers anzuordnen.

Die Filtrierung des Spritzmaterials kann bei der erfindungsgemäßen Ausbildung in der Materialzuführung und damit im Niederdruckbereich durchgeführt werden. Dieser Niederdruckbereich, welcher üblicherweise Drücke zwischen 100 und 200 bar aufweist, erlaubt eine effizientere Filtrierung, da im Bereich nach dem Spritzkolben bis zur Einspritzdüse relativ hohe Drücke entstehen können, welche üblicherweise zwischen 1000 und 2000 bar liegen. Bei derartig hohen Drücken wird eine Filtrierung nicht mehr sehr effizient. Ein derartig hoher Druck stellt allerdings auch relativ große mechanische Belastungen für die Einspritzdüse dar. Insbesondere diese großen mechanischen Belastungen können durch die erfindungsgemäße Ausbildung, bei welcher auf dünnwandige Bauteile verzichtet werden kann, sicher aufgenommen werden.

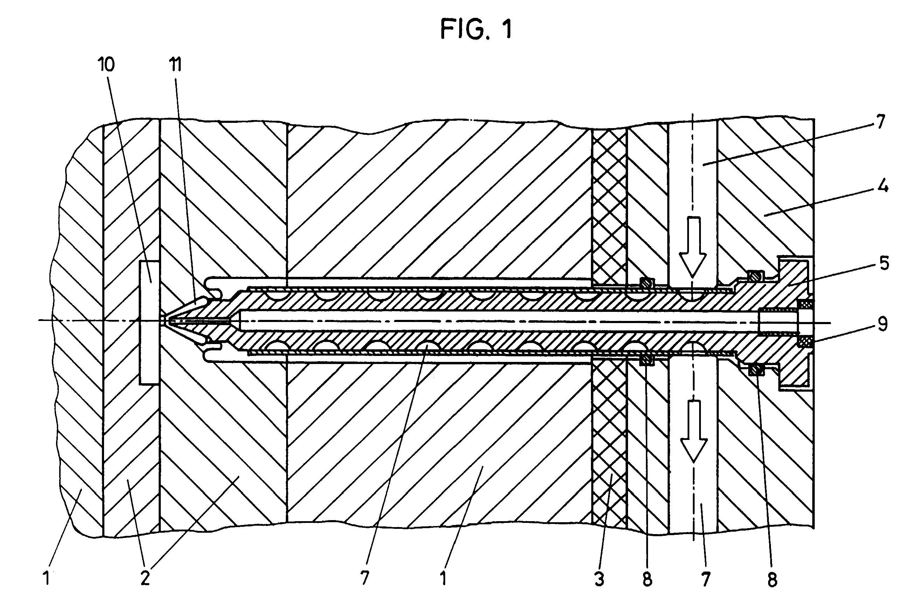

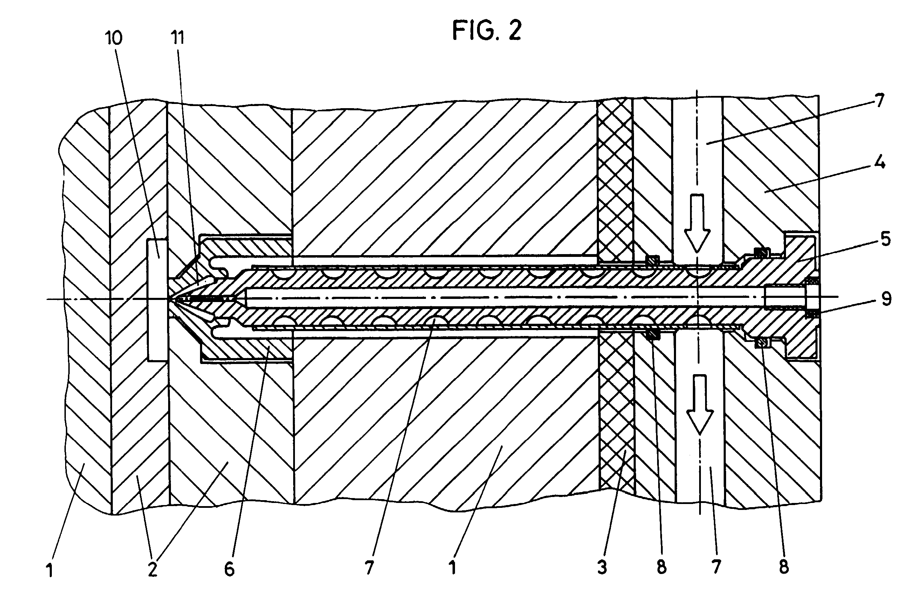

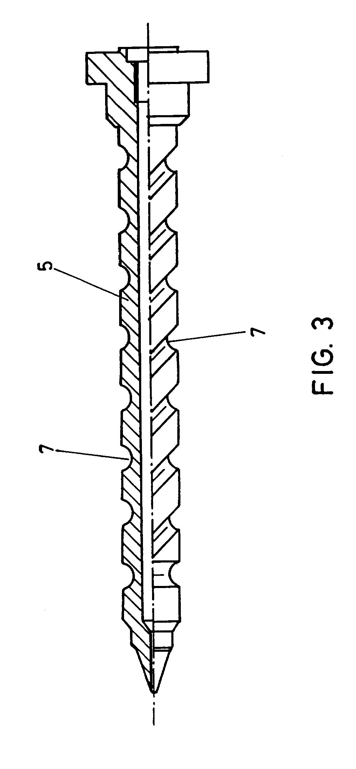

Die Erfingung wird nachfolgend anhand von in der Zeichnung schematisch dargestellten Auführungsbeispielen näher erläutert. In dieser zeigen Fig.1 eine erste Ausbildung einer erfindungsgemäßen Spritzgußform, Fig.2 eine abgewandelte Ausbildung entsprechend der Fig.1 mit zusätzlich vorgesehener Verschleißhülse und Fig.3 eine teilweise geschnittene Darstellung des Düsenkörpers.

In Fig.1 ist mit 1 eine Heizplatte bezeichnet, welche im Betrieb üblicherweise auf Temperaturen von etwa 200° C gehalten ist. An die Heizplatte anschließend sind Formplatten 2 vorgesehen. Auch diese Formplatten befinden sich auf Temperaturen von etwa 200° C im Betrieb. Zur Isolation ist in der Folge eine Temperierschutzplatte 3 angeordnet, an welche die Düsenhalteplatte 4 angeschlossen ist. Die Düsenhalteplatte 4 befindet sich auf Kühltemperatur und damit auf einer Temperatur von ungefähr 20° C. In die Düsenhalteplatte 4 ist eine Kaltkanaldüse 5 eingesetzt. Am Umfang der Kaltkanaldüse sind Kühlkanäle 7 ersichtlich. Die Dichtung der Kaltkanaldüse relativ zur Düsenhalteplatte 4 wird durch O-Ringdichtungen 8 gewährleistet. Eine weitere Dichtung 9 dient dem dichten Anschluß der Zuführungsleitung.

Die Kaltkanaldüse mündet in Abstand vom Formnest 10 in einer Vorkammer 11 der Formplatte 2, welche von zur Kaltkanaldüse 5 im wesentlichen konzentrischen und entsprechend der Düsenspitze konisch geneigten Wänden begrenzt ist. Der lichte Querschnitt dieser Vorkammer 11 verjüngt sich zum Austrittsende der Vorkammer, welches dem Formnest 10 benachbart ist.

Bei der Ausbildung nach Fig.2 ist zusätzlich eine Verschleißhülse 6 ersichtlich, welche in einfacher Weise zur Anpassung an verschiedene Erfordernisse getauscht werden kann. Insbesondere läßt sich durch einen Tausch der Verschleißhülse 6 die geometrische Gestalt der Vorkammer 11 den gewünschten Erfordernissen anpassen und es läßt sich sicherstellen, daß hier tatsächlich die gewünschte Isolation durch das in der Vorkammer 11 enthaltene elastomere Material gewährleistet wird.

Bei der Darstellung nach Fig.3 ist ersichtlich, daß die Kühlkanäle 7 von einer doppelgängigen Kühlspirale gebildet sind, so daß eine effiziente Kühlung einer entsprechend stabilen und dickwandigen Einspritzdüse gewährleistet werden kann.

## Patentansprüche

1. Spritzgußform für warmverfestigende oder vulkanisierende elastomere Materialien mit einem Formnest und einer gekühlten Einspritzdüse, deren Mündung mit dem Formnest in Verbindung stehen, **dadurch gekennzeichnet, daß** die Einspritzdüse (5) in einer mit dem Formnest (10) in offener Verbindung stehenden Vorkammer (11) in Abstand von dem Formnest (10) mündet.

2. Spritzgußform nach Anspruch 1, **dadurch gekennzeichnet, daß** in eine Formplatte (2) der Spritzgußform eine Verschleißhülse (6) eingesetzt ist und daß die Einspritzdüse (5) in die Verschleißhülse mündet.

3. Spritzgußform nach Anspruch 1 oder 2, **dadurch gekennzeichnet, daß** die Vorkammer (11) in der Formplatte (2) konzentrisch zur Düsenmündung angeordnet ist.

4. Spitzgußform nach Anspruch 1, 2 oder 3, **dadurch gekennzeichnet, daß** die Begrenzungswände der Vorkammer (11) im wesentlichen parallel zur Mantelfläche der Einspritzdüse (5) im Bereich der Mündung ausgebildet sind.

5. Spritzgußform nach einem der Ansprüche 1 bis 4, **dadurch gekennzeichnet, daß** der lichte Querschnitt der zur Einspritzdüse (5) konzentrischen, ringförmigen Vorkammer (11) in Richtung zur Düsenmündung kleiner wird.
